# EUROPÄISCHE PATENTANMELDUNG

(11) **EP 0 634 262 A1**
(43) Veröffentlichungstag der Anmeldung: **18.01.1995**
(21) Anmeldenummer: 94109472.4
(22) Anmeldetag: 20.06.1994
(51) Int. Cl.: B29C 45/17

(54) **Kunststoff-Spritzgiessmaschine**

(30) Priorität: 13.07.1993 DE 4323395
(71) Anmelder: Hehl, Karl, D-72290 Lossburg (DE)
(72) Erfinder: Hehl, Karl, D-72290 Lossburg (DE)
(74) Vertreter: Reinhardt, Harry

(57) **Zusammenfassung**

Bei einer Spritzgießmaschine sind der bewegliche Formträger (12) und ein Abstützelement (13) für einen Schließmechanismus eines beweglichen Formträgers (12) über ein Kraftübertragungselement beweglich verbunden, das die bei geschlossener Gießform auftretenden Kräfte aufnimmt. Als Kraftübertragungselement wird ein gesondertes verformbares Verformungselement vorgesehen, das im Bereich von Abstützelement (13) bzw. Schließmechanismus (S) und stationärem Formträger (11) drehbar gelagert ist. Dadurch wird ein bedarfsweiser freier Zugang zum Formspannraum gewährleistet.

## Beschreibung

Die Erfindung betrifft eine Spritzgießmaschine nach dem Oberbegriff des Anspruchs 1.

Aus der älteren nachveröffentlichten Patentanmeldung P 43 08 962.3 ist eine derartige Spritzgießmaschine bekannt. Das Kraftübertragungselement ist als gesondertes, durch die Kräfte verformbares Verformungselement ausgebildet. Die Verformungselemente werden von vornherein so angeordnet, daß sie stets einen möglichst freien Zugang zum Formspannraum ermöglichen.

Hiervon ausgehend liegt der vorliegenden Erfindung die Aufgabe zugrunde, eine Spritzgießmaschine der eingangs genannten Gattung derart weiterzubilden, daß das Verformungselement zur leichteren Übertragung der auftretenden Kräfte zwar in der Nähe des Formspannraums angeordnet wird, jedoch bedarfsweise ein freier Zugang zum Formspannraum möglich ist.

Diese Aufgabe wird durch die Merkmale des Anspruches 1 gelöst.

Dies geschieht dadurch, daß das Verformungselement im Bereich von Abstützelement bzw. Schließmechanismus und stationärem Formträger drehbar gelagert ist.

Dadurch wird es möglich, einerseits das Verformungselement nahe am Formspannraum anzuordnen, so daß keine zusätzlichen Hebelarme die zu übertragenden Kräfte unnötig erhöhen, andererseits kann jedoch das Verformungselement aus dem Weg geschwenkt werden, sofern ein Zugang von der einen oder anderen Seite oder auch von oben gewünscht ist. Als Verformungselement können dabei einzelne oder gemäß Anspruch 3 mehrere Elemente angeordnet werden, die untereinander am Drehpunkt verbunden sind. Sie bewegen sich dabei auf einer Bewegungsbahn, die außerhalb des Formspannraums verläuft.

Eine Anordnung gemäß Anspruch 5 ermöglicht insbesondere bei einer beweglichen Lagerung des Abstützelements eine einstellbare Befestigung des Verformungselements. Durch die Einheit Spannplatte, Spannbolzen und Einstellmutter tritt an der Verbindungsstelle zum Lagerelement keine Zug-, sondern eine Druckkraft auf.

Eine Festlegung des Verformungselements in seine jeweilige Lage kann entweder nach Anspruch 7 manuell über Gegenhalter erfolgen, oder es kann gemäß den Ansprüchen 8 und 9 eine Antriebseinheit vorgesehen werden, die das Verformungselement fixiert.

Im folgenden wird die Erfindung anhand der Zeichnungen näher erläutert. Es zeigen:
- Fig. 1: Eine Seitenansicht im wesentlichen der Formschließeinheit einer Spritzgießmaschine,
- Fig. 2: eine Ansicht gemäß Linie 2-2 von Fig. 1,
- Fig. 3: einen Schnitt gemäß Linie 3-3 von Fig. 2,
- Fig. 4,5: Schnitte gemäß den Linien 4-4 bzw. 5-5 von Fig. 1 mit einem über eine Antriebseinheit in die jeweiligen Endlagen verschwenktem Verformungselement.

Die Kunststoff-Spritzgießmaschine, die grundsätzlich zur Verarbeitung plastifizierbarer Materialien eingesetzt wird, besitzt einen Maschinenfuß 10, auf dem eine Formschließeinheit angeordnet ist. Die Formschließeinheit kann jedoch auch nur auf einem Teil des Maschinenfußes angeordnet sein, um eine Schwenkbarkeit der Formschließeinheit z. B. aus einer horizontalen in eine vertikale Lage zu erreichen. Die Formschließeinheit umfaßt einen stationären Formträger 11 und einen beweglichen Formträger 12. Ferner ist ein Abstützelement 13 vorgesehen, das einen beliebig angetriebenen Schließmechanismus stützt, über den der bewegliche Formträger 12 beim Formschluß auf den stationären Formträger hin bewegt wird. Um insbesondere die beim Formschluß auftretenden Kräfte zu übertragen, ist ein Kraftübertragungselement in Form von Holmen 14c vorgesehen, das mit dem stationären Formträger und zumindest mittelbar mit dem Abstützelement 13 beweglich verbunden ist. Der bewegliche Formträger 12 gleitet mit Gleitschuhen 12a auf Führungsschienen 15, die auf dem Maschinenfuß 10 über Lager 15a gelagert sind und als Bewegungsbahn für den Formträger dienen.

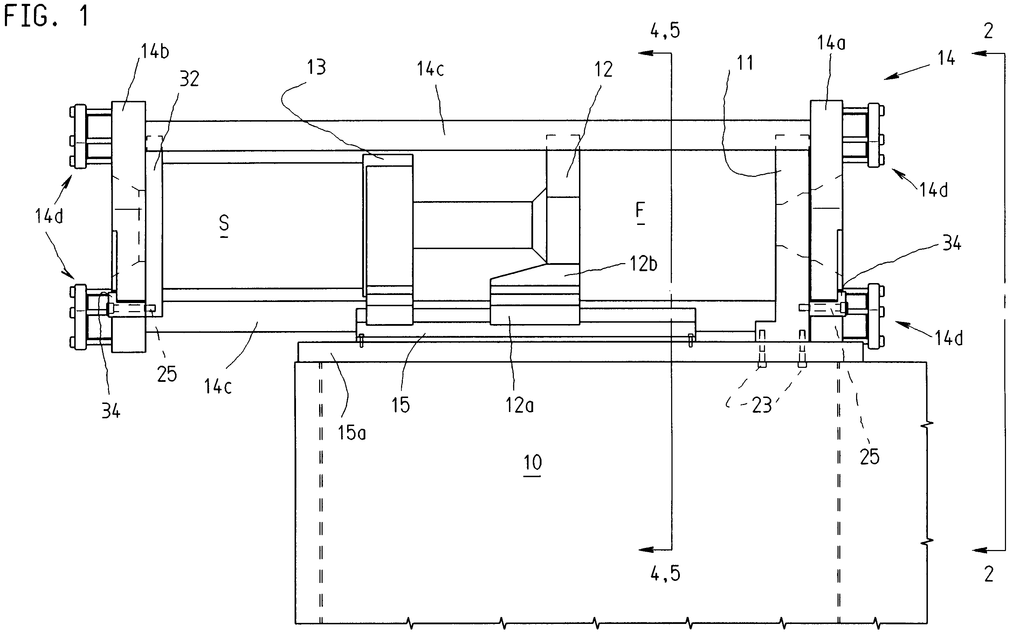

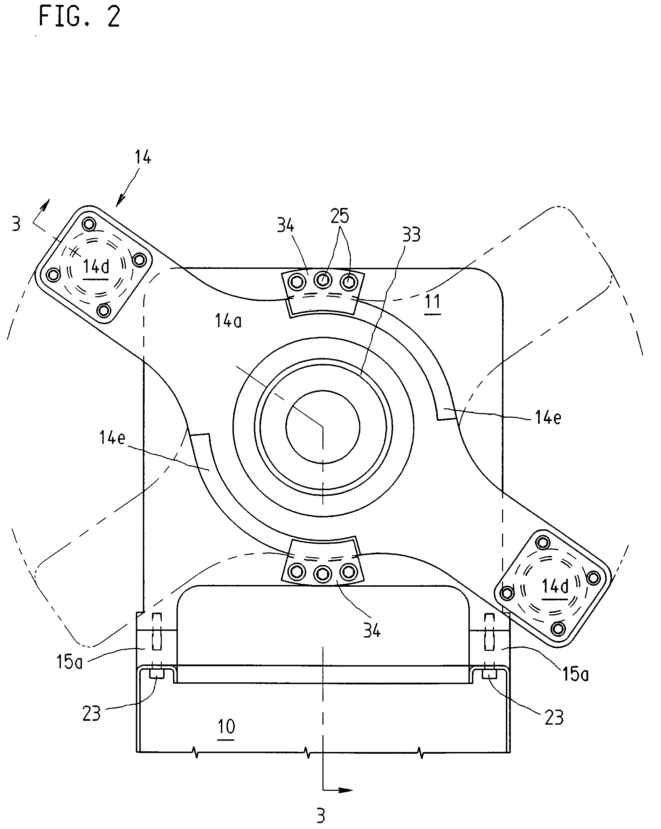

Das Kraftübertragungselement ist ein gesondertes, durch die beim Formschluß auftretenden Kräfte verformbares Verformungselement. Der stationäre Formträger ist über Schrauben 23 fest mit dem Maschinenfuß verbunden, während die Formschließeinheit im übrigen beweglich auf dem Maschinenfuß angeordnet ist, so daß Verformungen nicht in den Maschinenfuß eingeleitet werden. Die Verformungen werden vielmehr über die Verformungselemente aufgenommen, die sich zu diesem Zweck frei verformen können. Aus Figur 1 in Verbindung mit Figur 2 ist ersichtlich, daß das Verformungselement 14 im Bereich von Abstützelement 13 bzw. Schließmechanismus S und im Bereich des stationären Formträgers 12 drehbar gelagert ist. Diese Drehbarkeit ermöglicht es, das Verformungselement einerseits nahe am Formspannraum F vorzusehen, andererseits aber einen Zugang zum Formspannraum zu schaffen, ohne durch das Verformungselement behindert zu sein. Das Verformungselement kann ein einzelner drehbarer Bügel sein, der in beliebige Lagen überführbar und dort festlegbar ist, oder es können wie im Ausführungsbeispiel wenigstens zwei symmetrisch zu einer Symmetrieachse s-s der Spritzgießmaschine angeordnete Elemente sein, die den Formspannraum umgreifen. Vorzugsweise wird dabei eine Anordnung gewählt, die einen zentrischen Zugang zur Spritzgießform für eine Spritzgießeinheit ermöglicht. Es ist jedoch auch möglich, die Drehführung 33 konzentrisch so weit nach außen zu verlagern, daß eine in Längsrichtung erweiterte Durchtrittsöffnung für den Plastifizierzylinder einer Spritzgießeinheit möglich ist, der beispielsweise für einen Parallelanguß verschoben ist.

Lagerelemente 14a,14b sind in Drehführungen 33 geführt. Diese Lagerelemente bilden mit den Holmen 14c einen Kraftrahmen, der den Formspannraum umgreift. Die Lagerelemente 14a,14b lagern das Verformungselement so, daß die Holme zumindest im kraftlosen Zustand im wesentlichen außerhalb des Formspannraums F in einem Bereich verschwenkbar sind, der bei Vertikalprojektion außerhalb der Vertikalprojektion des Formspannraumes F liegt.

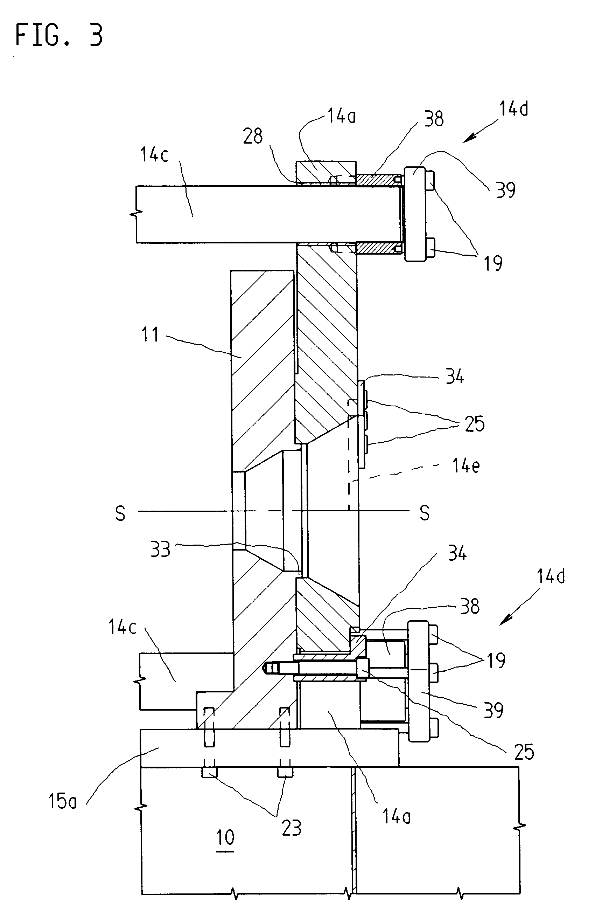

Die Holme 14c durchgreifen die Lagerelemente 14a,14b in einem Gleitlager 28 (Fig. 3). Die Holme sind an einer Spannplatte 39 abgestützt, die ihrerseits über Schrauben 19 am Lagerelement abgestützt ist. Die Schrauben übergreifen am Ende des Holms 14c angeordnete Einstellmuttern 38, so daß sich eine einstellbare Befestigungseinheit 14d ergibt, die eine Vorspannung der Mutter und eine Justierung der Plattenparallelität ermöglichen.

Grundsätzlich kann das Verformungselement an beliebigen Stellen diesseits und jenseits des Formspannraums in Schließrichtung gesehen angelenkt werden. Beispielsweise wäre eine Anlenkung am Abstützelement möglich, sofern dort zumindest bereichsweise Führungen vorgesehen werden und die Einheit Lagerelement in zwei Elemente aufgelöst wird. Eine einfache Anlenkung ergibt sich jedoch, wenn einerseits die Lagerelemente auf der vom Schließmechanismus abgewandten Seite des stationären Formträgers 11 angeordnet werden und andererseits das Lagerelement 14b am Ende der Formschließeinheit, also am Ende des Schließmechanismus angeordnet wird.

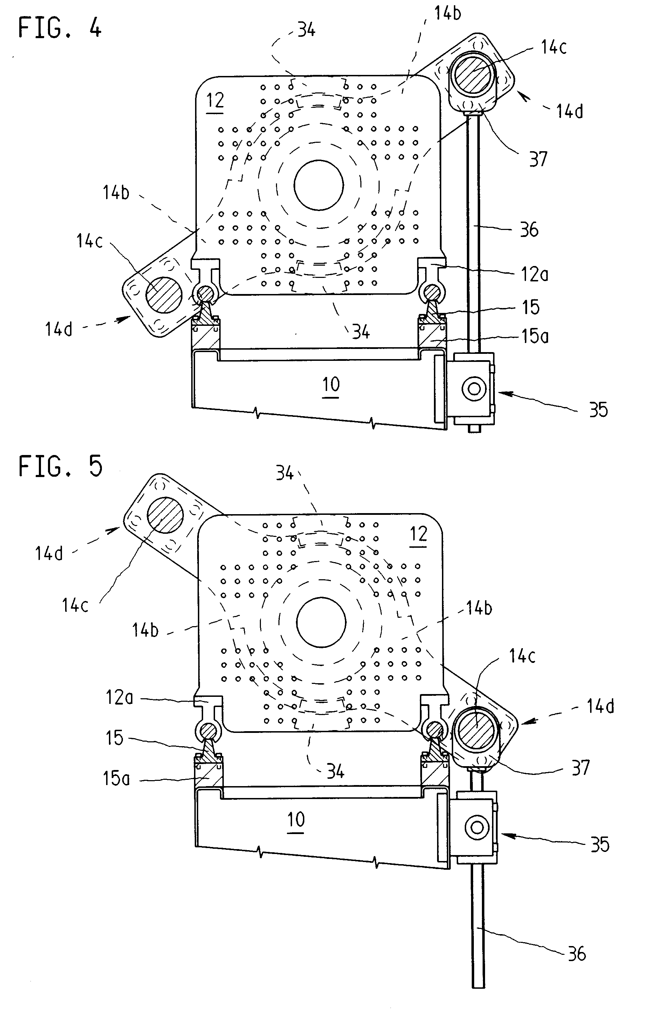

Grundsätzlich kann das Verformungselement 14 manuell oder automatisch verschwenkt werden. In beiden Fällen greifen Gegenhalter in Ausnehmungen 14e der Lagerelemente 14a,14b ein. Die Ausnehmungen begrenzen dabei die maximal mögliche Verschwenkung, die in Figur 2 gestrichelt dargestellt ist. Bei der manuell verschwenkbaren Ausführungsform sind die Gegenhalter als Spannpratzen ausgebildet, so daß durch Anziehen der Schrauben 25 eine Fixierung des Verformungselementes während des Spritzbetriebes erfolgen kann. Alternativ kann gemäß den Figuren 4 und 5 eine drehbar zum Beispiel am Maschinenfuß angeordnete Antriebseinheit vorgesehen werden, die beliebig angetrieben sein kann. Ist die Antriebseinheit elektromechanisch ausgebildet, so ergibt sich ein platzsparender Aufbau, wobei die Verstellspindel 36 an ihrem Spindelkopf 37 am Verformungselement angelenkt ist. Durch die gelenkige Lagerung am Verformungselement und der Antriebseinheit am Maschinenfuß kann die Verstellspindel 36 dem vom Verformungselement, also vom Holm 14c bei der Verschwenkung zurückgelegten Kreisbogen folgen. In diesem Fall sollen die Gegenhalter 34 eine Bewegung unter Spiel zulassen.

## Patentansprüche

1. Spritzgießmaschine insbesondere zur Verarbeitung von Kunststoffen und plastifizierbaren Materialien mit einem Maschinenfuß (10), einem mit dem Maschinenfuß oder einem Teil davon fest verbundenen, stationären (11) und einem beweglichen Formträger sowie mit einem einen Schließmechanismus für die Bewegung des beweglichen Formträgers (12) stützenden Abstützelement (13), das mit dem stationären Formträger (11) über wenigstens ein Kraftübertragungselement beweglich verbunden ist, das seinerseits im wesentlichen die bei geschlossener Gießform auftretenden Kräfte aufnimmt, sowie mit einer Bewegungsbahn für den beweglichen Formträger, wobei das Kraftübertragungselement als gesondertes, durch die Kräfte verformbares Verformungselement ausgebildet ist, dadurch gekennzeichnet, daß das Verformungselement (14) im Bereich von Abstützelement (13) bzw. Schließmechanismus (S) und stationärem Formträger (12) drehbar gelagert ist.

2. Spritzgießmaschine nach Anspruch 1, dadurch gekennzeichnet, daß das Abstützelement (13) am Maschinenfuß (10) in Schließrichtung beweglich gelagert ist.

3. Spritzgießmaschine nach Anspruch 1 oder 2, dadurch gekennzeichnet, daß das Verformungselement (14) wenigstens zwei, symmetrisch zu einer Symmetrieachse (s-s) der Spritzgießmaschine angeordnete Elemente umfaßt, die den Formspannraum (F) umgreifen.

4. Spritzgießmaschine nach einem der vorhergehenden Ansprüche, dadurch gekennzeichnet, daß in Drehführungen (33) geführte Lagerelemente (14a,14b) Holme (14c) des Verformungselements (14) so lagern, daß die Holme zumindest im kraftlosen Zustand im wesentlichen außerhalb des Formspannraums (F) in einem Bereich drehbar sind, der bei Vertikalprojektion außerhalb der Vertikalprojektion des Formspannraumes liegt.

5. Spritzgießmaschine nach Anspruch 4, dadurch gekennzeichnet, daß die Holme (14c) die Lagerelemente (14a,14b) in einem Gleitlager (28) durchgreifen und an einer Spannplatte (39) abgestützt sind, die ihrerseits über Schrauben (19) am Lagerelement (14a,14b) abgestützt ist, welche Schrauben eine am Ende des Holmes (14c) angeordnete Einstellmutter (38) übergreifen.

6. Spritzgießmaschine nach Anspruch 4 oder 5, dadurch gekennzeichnet, daß die Lagerelemente (14a,14b) auf der dem Schließmechanismus (S) abgewandten Seite des stationären Formträgers (11) und am Ende des Schließmechanismus (S) drehbar gelagert sind.

7. Spritzgießmaschine nach einem der Ansprüche 4 bis 6, dadurch gekennzeichnet, daß das Lagerelement (14a,14b) über Gegenhalter (34) in seiner jeweiligen Lage festlegbar ist, die in die Verschwenkung der Holme (14c) begrenzende Ausnehmungen (14e) der Lagerelemente (14a,14b) eingreifen.

8. Spritzgießmaschine nach einem der Ansprüche 1 bis 6, dadurch gekennzeichnet, daß eine Antriebseinheit (35) vorgesehen ist, die das Verformungselement (14) verschwenkt.

9. Spritzgießmaschine nach Anspruch 8, dadurch gekennzeichnet, daß die elektromechanische Antriebseinheit (35) drehbar am Maschinenfuß (10) gelagert ist und eine Verstellspindel (36) aufweist, deren Spindelkopf (37) am Verformungselement (14) angelenkt ist.
